# EUROPÄISCHE PATENTSCHRIFT

(11) **EP 3 197 767 B1**
(45) Veröffentlichungstag und Bekanntmachung des Hinweises auf die Patenterteilung: **07.07.2021**
(21) Anmeldenummer: 16762732.2
(22) Anmeldetag: 25.07.2016
(51) Int. Cl.: B62K 3/00, B62K 15/00

(54) **KLAPPBARER TRETROLLER**
COLLAPSIBLE SCOOTER
TROTTINETTE PLIANTE

(30) Priorität: 25.07.2015 CN 201520551441 U; 08.02.2016 AT 592016
(43) Veröffentlichungstag der Anmeldung: 02.08.2017
(73) Patentinhaber: D&E Company Produktions- und Vetriebs GmbH, 4710 Grieskirchen (AT)
(72) Erfinder: BERNDORFER, Wolfgang, 4723 Natternbach (AT)
(74) Vertreter: Burgstaller, Peter
(86) Internationale Anmeldenummer: PCT/EP2016/067688
(87) Internationale Veröffentlichungsnummer: WO 2017/017067

(56) Entgegenhaltungen:
- DE-A1-102013 003 484
- US-A1- 2002 145 264
- US-A1- 2008 315 544
- US-A1- 2012 098 238
- US-A1- 2012 187 646
- US-B1- 6 276 701

## Beschreibung

Die hier offenbarte Erfindung betrifft einen klappbaren Tretroller umfassend zumindest einen Tragrahmen mit einem vorderen Tragrahmenabschnitt als erstes zu stellendes Element und einem hinteren Tragrahmenabschnitt als zweites zu stellendes Element, Die hier offenbarte Erfindung betrifft gleichsam einen klappbaren Tretroller umfassend einen Tragrahmen als erstes zu stellendes Elemente mit einer angelenkten Haltestange als zweites zu stellendes Element. Es sind bei den erfindungsgemäßen Ausführungsformen die zu stellenden Elemente über ein Gelenk miteinander verbunden sind, welches Gelenk ein erstes an dem ersten zu stellenden Element angeschlossenes Eingriffselement und ein zweites an dem zweiten zu stellenden Element angeschlossenes Eingriffselement umfasst, wobei das Gelenk durch eine eine Relativbewegung der Eingriffselemente sperrende Eingriffsstellung der Eingriffselemente sperrbar ist.

Es sind nach dem Stand der Technik klappbare Tretroller (auch "Scooter" genannt) oder Kickboards bekannt.

US6276701B1 beschreibt einen Tretroller umfassend einen Tragrahmen mit einem ersten und einem zweiten Tragrahmenabschnitt, wobei die Tragrahmenabschnitte durch ein sperrbares Gelenk verbunden sind. Zum Sperren oder Entsperren einer Relativbewegung der Tragrahmenabschnitte zueinander wird ein Sperrelement von einer Sperrposition in eine Freigabeposition in einer in der Beschreibung von US6276701B1 nicht näher definierten Richtung bewegt. Die Figuren von US6276701B1 offenbaren eine Bewegung des Sperrelementes in vertikaler Richtung. Das Bedienelement zum Bewegen des Sperrelementes ist am Gelenk angeordnet, weshalb der in US6276701B1 offenbarte Tretroller für den Benutzer umständlich zu bedienen ist.

US2594034A zeigt einen Tretroller mit einem ersten und zweiten Tragrahmenabschnitt, welche über ein Teleksoplager zueinander stellbar gelagert sind. Die Bewegung der Tragrahmenabschnitte zueinander ist durch das Zusammenführen der Tragrahmenabschnitte in den Endpositionen begrenzt.

US6443470B1 offenbart einen Tretroller mit zwei über ein Gelenk verbundene Tragrahmenabschnitte, wobei zum Sperren des Gelenkes ein Stab in eine Bohrung eingebracht wird. Der Stab, welcher im Bereich des Gelenkes angeordnet ist, entspricht dem Bedienelement der im Folgenden offenbarten Erfindung.

Nach dem Stand der Technik sind insbesondere sperrbare Gelenke in Verbindung mit Tretrollern bekannt, welche Eingriffselemente umfassen, welche bei Eingriff der Eingriffselemente das Gelenk sperren und somit ein Falten des Tretrollers unterbinden. Bei Lösen des Eingriffes der Eingriffselemente wird das Gelenk freigegeben, sodass der Tretroller gefaltet werden kann.

Die nach dem Stand der Technik bekannten klappbaren Tretroller haben den Nachteil, dass das Zusammenklappen der Tragrahmenelemente nur schwer und umständlich durchführbar ist. Darüber hinaus besteht insbesondere bei Tretrollern mit einem in der Nähe zu einer Stehfläche des Tretrollers angeordneten, vom Tragrahmen wegstehenden Bedienelement zur Betätigung der Sperrvorrichtung die Gefahr, dass das Gelenk unabsichtlich entsperrt wird. Erfolgt ein solches unabsichtliches Entsperren des Gelenkes beispielsweise bei Fahrt, so können Stürze mit Verletzungen die Folge sein.

Dokument US 2002/145264 offenbart den Oberbegriff der unabhängigen Ansprüche 1 und 2. Die hier offenbarte Erfindung stellt sich somit die Aufgabe, einen klappbaren Tretroller bereitzustellen, welcher eine zu bedienende Sperrvorrichtung umfasst, die die oben genannten Nachteile überwindet.

Die Aufgabe wird erfindungsgemäss durch die Lehre der Patentansprüche 1 und 2 gelöst. Weitere vorteilhafte Ausgestaltungen und Weiterbildungen der Erfindung gehen aus den Unteransprüchen hervor. Andere Ausführungsformen werden ebenfalls weiter beschrieben. Das erste Eingriffselement von einer Freigabeposition in eine Sperrposition, in welcher das erste Eingriffselement im Eingriff mit dem zweiten Eingriffselement steht, durch eine Betätigung mittels eines mit dem ersten Eingriffselement mechanisch gekoppelten Bedienelementes relativ zum zweiten Eingriffselement bewegbar ist, welches Bedienelement vom Gelenk getrennt wie zum Beispiel an einem Lenker, an der Haltestange und/oder an einem Kotflügel angeordnet ist.

Der Fachmann ist in der Lage, das erste Eingriffselement mit dem Bedienelement durch die Anordnung von mechanischen Elementen zu koppeln, sodass durch die Betätigung des Bedienelementes das erste Eingriffselement von der Sperrposition in eine Freigabeposition gebracht werden kann. Der Fachmann ist insbesondere hierzu in der Lage, als in der nachstehenden Figurenbeschreibung die mechanische Koppelung anhand von Ausführungsbeispielen hinreichend offenbart ist.

Die Erfindung stellt sich weiters die Aufgabe eine Mechanik für einen Tretroller bereitzustellen, mittels welcher Mechanik das Gelenk zum Klappen des Tretrollers von der stehenden Person ohne ein Hochheben des Tretrollers freigegeben werden kann. Diese Aufgabenstellung wird im Grunde dadurch gelöst, dass das Bedienelement an der Lenkstange angeordnet wird.

Im Besonderen wird die weitere Aufgabe dadurch gelöst, dass ein Führungsrohr und/oder ein Lenkstangenelement an einem der Tragrahmenabschnitte angeschlossen sind, in welchem Führungsrohr beziehungsweise in welchem Lenkstangenelement ein Bedienelement zur Bewegung des Sperrelementes geführt ist. Die für eine mechanische Koppelung des Eingriffselementes und des Bedienelementes notwendigen Elemente sind somit im Inneren des Tretrollers angeordnet.

Das Führungsrohr beziehungsweise das Lenkstangenelement kann sich in einem Winkel alpha zu dem angeschlossenen Tragrahmenabschnitt erstrecken. Der Winkel alpha ist im Wesentlichen anhand der Tretroller nach dem Stand der Technik bekannt, da üblicher Weise der vordere Abschnitt des Rahmens und das Führungslager in einem Winkel zueinander angeordnet sind, wobei die Wahl des Winkels alpha bei Tretrollern nach dem Stand der Technik vor allem in Bezug auf die Fahreigenschaften des Tretrollers erfolgt. Der Fachmann kann den Winkel alpha zusätzlich in Bezug auf die mechanische Koppelung von erstem Eingriffselement und dem Bedienelement wählen, da diese Koppelung durch im Führungslager und/oder in der Lenkstange befindliche mechanische Elemente erfolgt.

Das Bedienelement kann in einer Ausführungsform von einer ersten Stellung zum Gebrauch als ein weiteres Lenkstangenelement zu einer zweiten Stellung zur Bewegung des Sperrelementes überführbar ausgebildet sein.

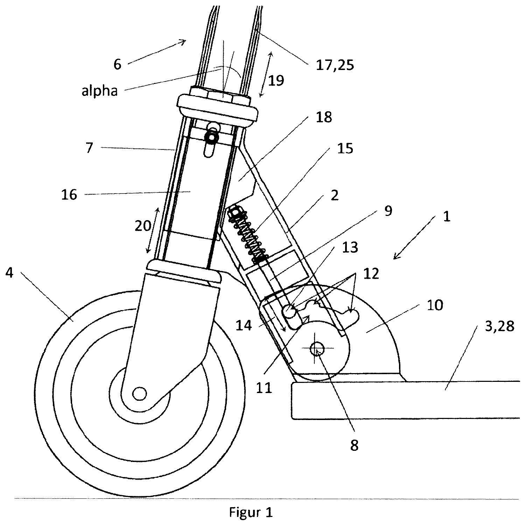

Weder die Figuren noch die Figurenbeschreibung sollen den Gegenstand der hier offenbarten Erfindung einschränken. Die Figuren zeigen beispielhaft Ausführungsformen des erfindungsgemäßen Tretrollers. Der Fachmann ist zweifelsfrei in der Lage, die offenbarten Ausführungsformen des erfindungsgemäßen Tretrollers ohne erfinderische Tätigkeit abzuändern und/oder zu kombinieren. Die Figur 1 zeigt ein vertikales Schnittbild eines Teils einer Ausführungsform des erfindungsgemäßen Tretrollers, insbesondere des Gelenkes, welches die Tragrahmenabschnitte zueinander stellbar verbindet.

Die Figuren 2 bis 5 zeigen Seitenansichten des erfindungsgemäßen Tretrollers mit unterschiedlichen Stellungen des ersten Tragrahmenabschnittes zum zweiten Tragrahmenabschnitt.

Figur 6 und Figur 7 zeigen eine weitere nicht beanspruchte Ausführungsform des Tretrollers.

Figur 8 und Figur 9 zeigen Prinzipskizzen einer weiteren Ausführungsform des erfindungsgemäßen Tretrollers.

In den Figuren sind die nachstehenden Elemente durch die vorangestellten Bezugszeichen gekennzeichnet.
- 1: Gelenk
- 2: vorderer Tragrahmenabschnitt
- 3: hinterer Tragrahmenabschnitt
- 4: Vorderrad
- 5: Hinterrad
- 6: Lenker
- 7: Führungslager
- 8: Gelenkachse
- 9: vorderes Eingriffselement
- 10: hinteres Eingriffselement
- 11: Langloch
- 12: Ausnehmung
- 13: Stab
- 14: Bewegungsrichtung erstes Eingriffselement
- 15: Feder
- 16: Betätigungselement
- 17: Lenkstange
- 18: Vorsprung
- 19: Bewegungsrichtung Lenkstange
- 20: Bewegungsrichtung Betätigungselement
- 21: oberes Lenkstangenelement
- 22: unteres Lenkstangenelement
- 23: Untergrund
- 24: Klappkraft
- 25: Bedienelement
- 26: Kotflügel
- 27: Kotflügeldrehpunkt
- 28: Tragrahmen
- 29: Haltestange

Die Figur 1 zeigt ein Schnittbild eines Teils des erfindungsgemäßen, klappbaren Tretrollers, insbesondere ein Detail des erfindungsgemäßen Tretrollers im Bereich des Gelenkes 1.

Der Tretroller umfasst ein Vorderrad 4, ein Hinterrad 5 (in Figur 1 nicht dargestellt), einen Lenker 6 und einen Tragrahmen 28 mit einem vorderen Tragrahmenabschnitt 2 als erstes zu stellendes Element und einem hinteren Tragrahmenabschnitt 3 als zweites zu stellende Element.

Die Tragrahmenabschnitte 2, 3 sind über ein Gelenk 1 verbunden, sodass die Tragrahmenabschnitte 2, 3 durch eine Relativdrehung um die Gelenksachse 8 zueinander stellbar sind. Das Gelenk 1 weist eine Gelenksachse 8 (normal zu der Bildfläche der Figur 1) auf, welche Gelenksachse 8 sich rechtwinkelig zu der Längserstreckung des Tretrollers erstreckt.

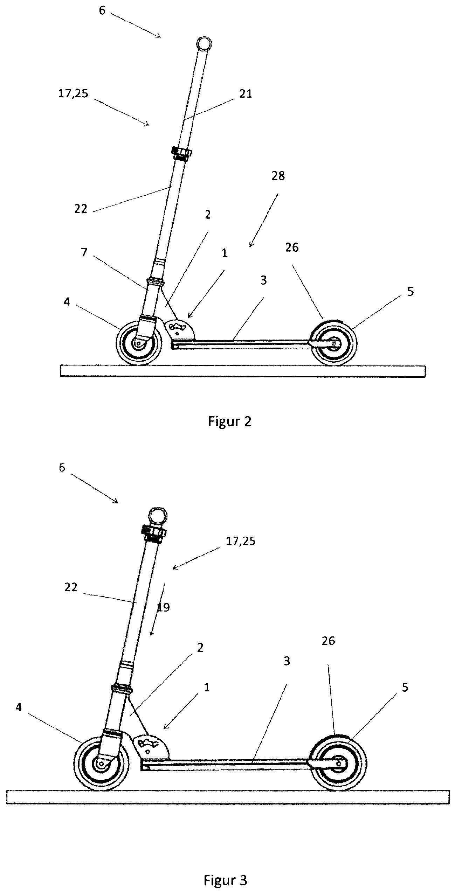

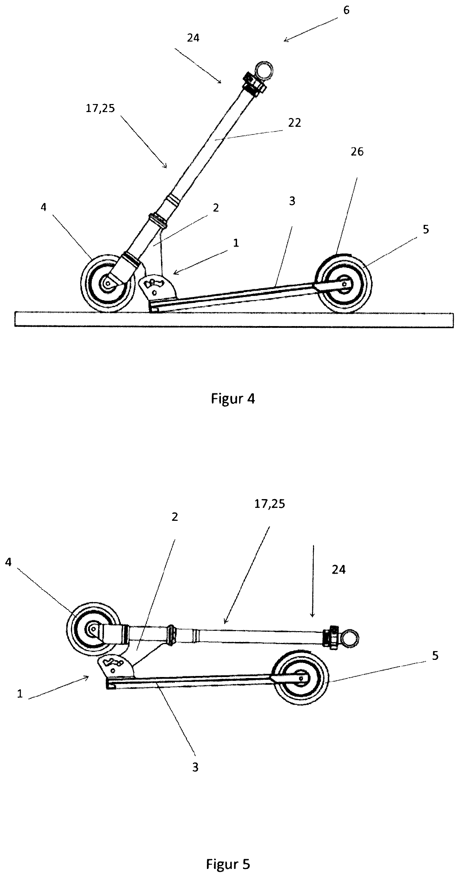

Durch das Stellen der Tragrahmenabschnitte 3, 4 zueinander wird der erfindungsgemäße Tretroller von einer Gebrauchsstellung (siehe Figur 2) zu einer Parkstellung (siehe Figur 4) oder zu einer Verwahrstellung (siehe Figur 5) gefaltet.

Das Gelenk 1 der in Figur 1 dargestellten Ausführungsform umfasst zwei Eingriffselemente 9,10, welche Eingriffselemente 9,10 im Eingriff stehend ein Stellen der zu stellenden Elemente durch ein Sperren des Gelenks 1 unterbinden.

Das erste Eingriffselement 9 ist am vorderen Tragrahmenabschnitt 2 angeschlossen. Bei der in Figur 1 dargestellten Ausführungsform des Tretrollers umfasst das erste Eingriffselement 9 einen sich rechtwinkelig zur Bildebene erstreckenden Stab 13, welcher Stab 13 in Eingriff mit dem zweiten Eingriffselement 10 bringbar ist.

Das zweite Eingriffselement 10 umfasst ein Langloch 11, das sich radial beabstandet um die Gelenksachse 8 erstreckt, mit mehreren Ausnehmungen 12. Der Stab 13 als Teil des ersten Eingriffselementes 9 ist zum Sperren des Gelenkes 1 in die Ausnehmungen 12 einbringbar, sodass der Stab 13 und die Ausnehmung 12 als Teil des zweiten Eingriffselementes 10 im Eingriff stehen. Befindet sich der Stab 13 im Langloch 11, so ist das Gelenk 1 freigegeben. Die in Figur 1 gezeigte Ausführungsform umfasst jeweils eine Ausnehmung zum Sperren des Gelenkes 1 - bei einer Benennung von links nach rechts im Uhrzeigersinn - in der Verwahrstellung (siehe Figur 5) oder in der Parkstellung (siehe Figur 4) und in der Gebrauchsstellung (siehe Figur 2) des Tretrollers.

Das erste Eingriffselement 9 ist parallel zu der Erstreckungsebene des vorderen Tragrahmenabschnitts 2 von einer Freigabeposition in eine in Figur 1 dargestellte Sperrposition durch eine Betätigung mittels eines Bedienelementes 25 bewegbar. In Figur 1 symbolisiert der Pfeil 14 die Bewegungsrichtung des ersten Eingriffselementes 9.

Vom Gelenk 1 aus gesehen erstreckt sich der vordere Tragrahmenabschnitt 2 ansteigend. Die hier offenbarte Erfindung nutzt diesen Umstand, um das erste Eingriffselement 9 in der Ebene des vorderen Tragrahmenabschnittes 2 anzuordnen. Dadurch ist es möglich, das das Bedienelement 25 in einer höheren und somit für den Benutzer leichter zu bedienenden Höhenposition als das Gelenk 1 anzuordnen. Das Bedienelement 25 ist somit am Tretroller vom Gelenk 1 entfernt angeordnet.

Das erste Eingriffselement 9 umfasst eine Feder 15 als Vorspannmittel. Das erste Eingriffselement 9 ist aus der in Figur 1 dargestellten Sperrposition nur unter Überwindung einer Vorspannkraft bewegbar. Das Vorspannmittel ist als eine mit dem ersten Eingriffselement 9 gekoppelte Feder 15 ausgebildet, die bei Bewegung des Stabes 13 aus einer der Ausnehmungen 12 verformt und somit weiter vorgespannt wird. Die Feder 15 wird bei Bewegung des ersten Eingriffselementes 9 gegen eine Strebe des vorderen Tragrahmenabschnittes gepresst.

Es ist am vorderen Tragrahmenabschnitt 2 ein Führungslager 7 angeschlossen, welches Führungslager 7 sich in einem Winkel alpha zum vorderen Tragrahmenabschnitt 2 geneigt erstreckt. Im Führungslager 7 ist ein Betätigungselement 16 geführt, Der Lenker 6 wird - ähnlich wie bei Tretrollern nach dem Stand der Technik - durch das Führungslager 7 geführt, sodass der Benutzer durch den Lenker 6 um seine Längsachse stellen kann. Das Betätigungselement 16 ist durch die als Bedienelement 25 wirkende Lenkstange 17 bewegbar, wobei sich aufgrund der Lagerung des Bedienelementes 16 im Führungslager 7 das Bedienelement 16 nur parallel zu der Erstreckungsrichtung des Führungslagers 7 bewegen lässt.

Das Betätigungselement 16 umfasst einen Vorsprung 18 zur Weitergabe der Bewegung des Betätigungselementes 16 an das erste Eingriffselement 9.

Das Betätigungselement 16 und das erste Eingriffselement 9 sind im Inneren des Tretrollers angeordnet.

Da das Betätigungselement 16 und das erste Eingriffselement 9 durch eine auf die Lenkstange 17 aufgebrachte Bewegung nach unten bewegt werden, wirkt die Lenkstange 17 als Bedienelement 25 zum Lösen der Sperre des Gelenkes 1. Die als Bedienelement 25 wirkende Lenkstange 25, insbesondere die in Figur 1 nicht dargestellten, jedoch nach dem Stand der Technik bekannten Griffe ist beziehungsweise sind in einer deutlich höheren Höhenposition als das Gelenk 1 und getrennt von diesem angeordnet. Die zum Entsperren des Gelenkes 1 notwendige Bewegung der Lenkstange 17 nach unten, ist für den Benutzer im Stehen sehr bequem und einfach auszuführen.

Die Pfeile 19, 20 symbolisieren die Bewegungsrichtungen der Lenkstange 17 beziehungsweise des Betätigungselementes 16.

Die Figuren 2 bis 5 zeigen Ansichten einer Ausführungsform des erfindungsgemäßen Tretrollers. Anhand der Figuren 2 bis 5 wird der Vorgang des Zusammenklappens des erfindungsgemäßen Tretrollers veranschaulicht. Aus Gründen der Übersichtlichkeit sind nicht alle Elemente in den Figuren 2 bis 5 mit Bezugszeichen versehen.

Figur 2 zeigt eine Seitenansicht des Tretrollers umfassend ein Vorderrad 4, ein Hinterrad 5 und einen sich zwischen den Rädern 4, 5 erstreckenden Tragrahmen 28. Es ist weiters ein Lenker 6 durch ein Führungslager 7 zum Lenken des am Lenker 6 angelenkten Vorderrades 4 geführt. Der Lenker 6 umfasst eine Lenkstange 17 mit einem oberen Lenkstangenelement 21 und ein unteres Lenkstangenelement 22.

Der Tragrahmen 28 ist durch ein Gelenk 1 in einen vorderen Tragrahmenabschnitt 2 als erstes zu stellendes Elemente und einen hinteren Tragrahmenabschnitt 3 als zweites zu stellendes Element geteilt. Der vordere Tragrahmenabschnitt 2 und der hintere Tragrahmenabschnitt 3 sind bei Freigabe des sperrbaren Gelenkes 1 zum Zusammenfalten des Tretrollers zueinander stellbar.

Figur 3 zeigt den in Figur 2 dargestellten Tretroller mit dem oberen Lenkstangenelement 21 eingebracht in das untere Lenkstangenelement 22. Im Vergleich hierzu zeigt Figur 2 das obere Lenkstangenelement 21 in einer ausgefahrenen Position. In dieser Stellung steht das obere Lenkstangenelement 21 als Teil der Lenkstange 17 im Eingriff mit dem Betätigungselement 16, sodass das Betätigungselement 16 - wie in obiger Figurenbeschreibung zu Figur 1 offenbart - durch eine Bewegung der Lenkstange 17 bewegbar ist. Es ist somit durch die Lenkstange 17 (eine Bewegung nach unten - siehe Pfeil 19) das Gelenk 1 entsperrbar. Der Benutzer kann die Bewegung der Lenkstange 17 durch sein Eigengewicht unterstützen.

Die Lenkstange 17 wirkt somit als Bedienelement 25 zum Entsperren des Gelenkes 1. Da bei dem in Figur 3 gezeigten Tretroller eine Betätigung des Bedienelementes 25 und somit des ersten Eingriffselementes 9 nur bei einem eingefahrenen oberen Lenkstangenelement 21 möglich ist, umfasst der Tretroller somit eine Sicherheitsvorrichtung gegen das unbeabsichtigte Entsperren des Gelenkes bei Fahrt, zumal beim Tretroller in Gebrauchsstellung und somit bei Fahrt das obere Lenkstangenelement 21 in einer ausgefahrenen Position ist.

Unter Ausübung einer Klappkraft 24 ist der erfindungsgemäße Tretroller nach Freigabe des Gelenkes 1 durch Betätigung des Bedienelementes 25 in eine in Figur 4 dargestellte Parkstellung überführbar. In dieser Parkstellung kontaktiert der hintere Rahmenabschnitt 3 über seine Breitenausdehnung (normal zu Bildfläche der Figur 4) den Untergrund 23, sodass der Tretroller nicht umkippen kann. Das Gelenk 1 ist bei Erreichen der in Figur 4 gezeigten Parkstellung durch Einrasten der Stellelemente 9, 10 gesperrt.

Nach wiederholtem Entsperren des Gelenkes 1 und Aufbringen einer Klappkraft 24 ist der Tretroller in seine zusammengeklappte Stellung - wie in Figur 5 dargestellt - überführbar. In dieser Stellung von vorderem Tragrahmenabschnitt 2 und hinterem Tragrahmenabschnitt 3 zueinander, rasten die Stellelemente 9, 10 wiederum ein, sodass das Gelenk 1 gesperrt ist.

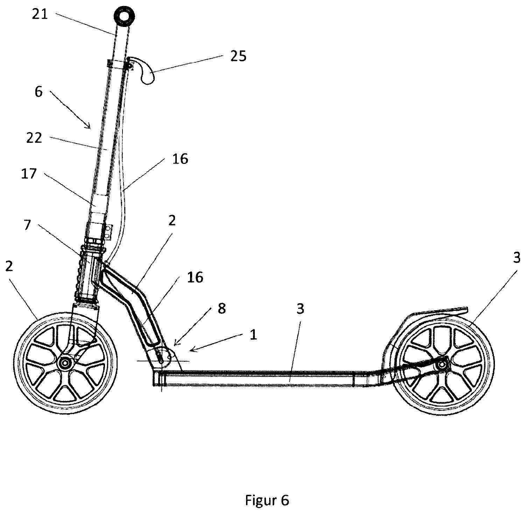

Figur 6 zeigt eine weitere nicht beanspruchte Ausführungsform des Tretrollers. Der Tretroller umfasst einen sich zwischen dem Vorderrad 4 und dem Hinterrad 5 erstreckenden Tragrahmen 28 mit einem vorderen Tragrahmenabschnitt 2 und einem hinteren Tragrahmenabschnitt 3, welche über ein Gelenk 1 um eine Gelenksachse 8 stellbar mit einander verbunden sind. Der Tretroller umfasst weiters ein am vorderen Tragrahmenabschnitt 2 angebrachtes Führungslager 7, durch welches Führungslager 7 die Lenkstange 17 des Lenkers 6 zum Stellen des Vorderrades 2 geführt ist.

Das Gelenk 1 umfasst ein erstes Eingriffselement 9 und ein zweites Eingriffselement 10, durch welche bei Eingriff zueinander eine Drehbewegung des vorderen Tragrahmenabschnittes 9 relativ zum hinteren Tragrahmenabschnitt 10, somit das Gelenk 1 - ähnlich zu der oben beschriebenen Ausführungsvariante - sperrbar ist. Aus Gründen der Übersichtlichkeit sind die einzelnen Elemente im Bereich des Gelenkes 1 in Figur 6 nicht eingetragen.

Beginnend vom Gelenk 1 erstreckt sich ein als Betätigungselement 16 wirkender Seilzug zu dem Bedienelement 25. Der Seilzug ist im Inneren des vorderen Tragrahmenabschnittes 2 angeordnet. Im Schnittbereich zwischen Führungslagers 7 und vorderem Tragrahmenabschnitt 2 wird der Seilzug aus dem vorderen Tragrahmenabschnitt 2 und zum Lenker 6 geführt, Im Bereich des Lenkers 6 weist der Seilzug ein ausreichendes Spiel zum Lenker 6 auf, sodass der Seilzug ein Stellen des Lenkers 6 um seine Lenkachse möglichst nicht behindert.

Das erste Eingriffselement 9, welches im Bereich des Gelenkes 1 angeordnet ist, ist durch das im Bereich des Lenkers 6 angeordnete Bedienelement 25 unter Überwindung einer auf das erste Eingriffselement 9 wirkende Vorspannkraft betätigbar. Bei der in Figur 6 dargestellten Ausführungsform wird das Bedienelement 25 zu einem Teil innerhalb des vorderen Tragrahmenabschnittes 2 und zu einem anderen Teil benachbart zu der Lenkstange 17 angeordnet.

Im Unterschied zu der in Figur 1 dargestellten Ausführungsform ist eine Betätigung des ersten Eingriffselementes 9 unabhängig von einer Stellung des oberen Lenkstangenelementes 21 möglich. Nach dem Entsperren des Gelenkes 1 kann der Tretroller unter Aufbringung einer Klappkraft 24 auf den Lenker 6 zusammengeklappt werden.

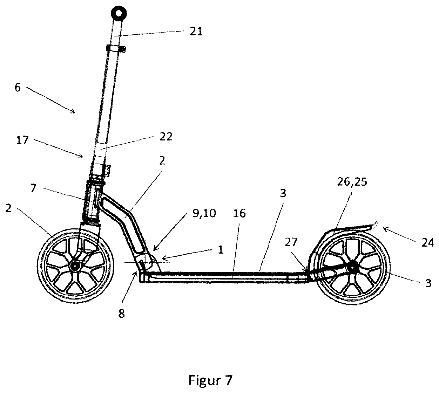

Figur 7 zeigt eine weitere Ausführungsform des erfindungsgemäßen Tretrollers. Der Tretroller umfasst im Wesentlichen einen sich zwischen einem Vorderrad 4 und einem Hinterrad 5 erstreckenden Tragrahmen 28 mit einem vorderen Tragrahmenabschnitt 2 und einem hinteren Tragrahmenabschnitt 3. Die Tragrahmenabschnitte 2, 3 sind über ein Gelenk 1 verbunden und somit durch eine Drehung um eine Gelenksachse 8 zueinander stellbar, sodass der Tretroller von einer Gebrauchsstellung (siehe Figur 7) in eine nicht offenbarte Verwahrstellung (ähnlich zu Figur 5) überführbar ist.

Der Tretroller umfasst weiters einen über dem Hinterrad 3 angeordneten Kotflügel 26, welcher durch Inkontaktbringen mit der Oberfläche des Hinterrades - wie nach dem Stand der Technik bekannt - als Reibungsbremse wirkt. Der Benutzer des Tretrollers verlagert zur Betätigung des als Reibungsbremse wirkenden Kotflügels 26 einen Fuß auf den Kotflügel 26, um diesen gegen die Oberfläche des Hinterrades 3 zu pressen.

Das in Figur 7 gezeigte Gelenk 1 ist durch Eingriffselemente, welche bereits oben ausreichend offenbart wurden, oder durch sonstige Sperrvorrichtungen nach dem Stand der Technik sperrbar.

Beginnend von dem Gelenk 1 erstreckt sich ein als Zugseil ausgebildetes Betätigungselement 16 zu dem Kotflügel 26. Der Kotflügel 26 ist um einen Kotflügeldrehpunkt 27 drehbar gelagert. Durch die um den Kotflügeldrehpunkt 27 drehbare Lagerung des Kotflügels 26 kann der Kotflügel 26 mit der Oberfläche des Hinterrades 3 in Kontakt gebracht werden, sodass der Kotflügel 26 bei einer Bewegung nach unten, somit in Richtung der Oberfläche des Hinterrades 4 als Reibungsbremse wirkt.

Bei Bewegung des Kotflügels 26 nach oben bewirkt die Drehung des Kotflügels 26 um den Kotflügeldrehpunk 27 ein Spannen des als Betätigungselement 16 wirkenden Seils, sodass durch ein Lösen des Eingriffes der Eingriffselemente 9, 10 ein Lösen der Sperre des Gelenkes 1 bewirkt wird. Die Tragrahmenabschnitte 2, 3 sind hierdurch zueinander stellbar, wodurch der Tretroller zusammengeklappt werden kann.

Der Benutzer betätigt den Kotflügel 26 als Bedienelement 25 vorzugsweise an dessen hinteren Ende, wobei er das hintere Ende des Kotflügels 26 mit seinem Fuß anhebt. Hierdurch wird auf den Tretroller die Klappkraft 24 aufgebracht, sodass der Tretroller nach Freigabe des Gelenkes 1 zusammengeklappt wird. Die Freigabe des Gelenkes 1 erfolgt unabhängig von einer Stellung der Lenkstangenelemente 21, 22.

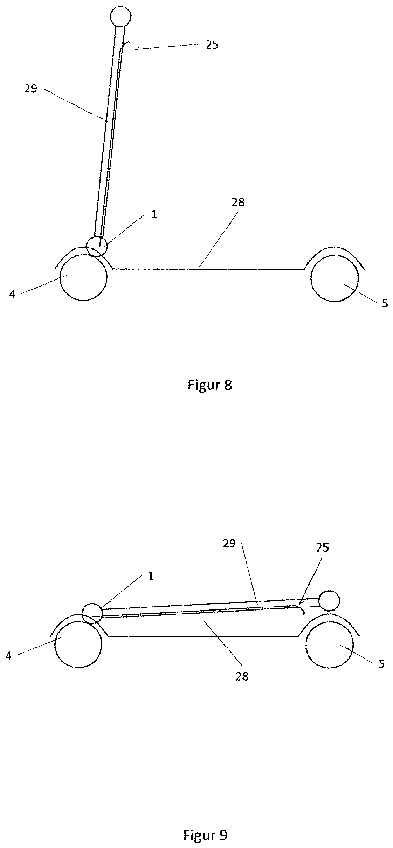

Figur 8 und Figur 9 zeigen eine weitere Ausführungsform des erfindungsgemäßen klappbaren Tretrollers. Im Unterschied zu den oben beschriebenen Ausführungsform ist nicht ein erster Tragrahmenabschnitt 2 und ein hinterer Tragrahmenabschnitt 3 zueinander, sondern der Tragrahmen 28 und die Haltestange 29 zueinander klappbar.

Der erfindungsgemäße Tretroller umfasst zumindest einen Tragrahmen 28 als erstes zu stellendes Element mit einer angelenkten Haltestange 29 als zweites zu stellendes Element. Der Tragrahmen 28 und die Haltestange 29 sind über ein Gelenk 1 miteinander verbunden, sodass die Haltestange 29 von einer Gebrauchsstellung (Figur 8) in eine Verwahrstellung (Figur 9) klappbar ist. In der Gebrauchsstellung ist die Haltestange 29 im Wesentlichen senkrecht zu dem Tragrahmen 28 und in der Verwahrstellung im Wesentlichen parallel zu dem Tragrahmen 28 angeordnet. Das zwischen dem Tragrahmen 28 und der Haltestange 29 angeordnete Gelenk 1 erlaubt das Schwenken der Haltestange 29 von einer Stellung in die andere Stellung, ohne dass ein Lösen der Haltestange 29 vom Tragrahmen 28 erforderlich ist.

Das Gelenk 1 umfasst ein erstes, mit dem Tragrahmen 28 verbundenes Eingriffselement 9 und ein zweites, mit der Haltestange 29 verbundenes Eingriffselement 10 umfasst. Das Gelenke 1 ist durch eine eine Relativbewegung der Eingriffselemente 9, 10 sperrende Eingriffsstellung der Eingriffselemente 9,10 sperrbar ist, sodass die Haltestange 1 in der Gebrauchsstellung und in der Verwahrstellung relativ zu dem Tragrahmen 28 fixiert wird.

Das Bedienelement 25 zum Sperren und Freigeben des Gelenkes 1 ist an der Haltestange 29, somit getrennt vom Gelenk 1 angeordnet.

## Patentansprüche

1. Klappbarer Tretroller umfassend zumindest
einen Tragrahmen (28) mit einem vorderen Tragrahmenabschnitt (2) als erstes zu stellendes Element und einem hinteren Tragrahmenabschnitt (3) als zweites zu stellendes Element, wobei die zu stellenden Elemente über ein eine Gelenksachse (8) umfassendes Gelenk (1) verbunden sind,
welches Gelenk (1) ein erstes mit dem ersten zu stellendem Element verbundenes Eingriffselement (9) und ein zweites mit dem zweiten zu stellendem Element verbundenes Eingriffselement (10) umfasst,
und das zweite Eingriffselement (10) umfasst ein Langloch (11) mit mehreren Ausnehmungen (12),
wobei das Gelenk (1) durch eine eine Relativbewegung der Eingriffselemente (9, 10) sperrende Eingriffsstellung der Eingriffselemente (9,10) sperrbar ist,
wobei das erste Eingriffselement (9) von einer Sperrposition, in welcher Sperrposition das erste Eingriffselement (9) im Eingriff mit dem zweiten Eingriffselement (10) steht und ein Stab (13) als ein Teil des ersten Eingriffselementes (9) in eine Ausnehmung (12) des zweiten Eingriffselementes (10) eingebracht ist, in eine Freigabeposition, in welcher Freigabeposition der Stab (13) in ein radial zu der Gelenksachse (8) beabstandetes Langloch (11) eingebracht ist, durch eine Betätigung mittels eines Bedienelementes (25) relativ zum zweiten Eingriffselement (10) bewegbar ist,
welches Bedienelement (25) mit dem ersten Eingriffselement (9) mechanisch gekoppelt ist, wobei am vorderen Tragrahmenabschnitt (2) ein Führungslager (7) angeschlossen ist, welches Führungslager (7) sich in einem Winkel alpha zum vorderen Tragrahmenabschnitt (2) geneigt erstreckt, und ein Betätigungselement (16) durch das in einem Führungslager (7) und nur in einer Erstreckungsrichtung des Führungslagers (7) bewegbare Bedienelement (25) bewegbar ist
und das Betätigungselement (16) einen Vorsprung (18) zur Weitergabe einer Bewegung an das erste Eingriffselement (9) umfasst
welches erstes Eingriffselement (9) eine Feder (15) als ein Vorspannmittel umfasst, wobei das erste Eingriffselement (9) aus der Sperrposition in die Freigabeposition mitsamt dem Betätigungselement (16) unter Überwindung einer Vorspannkraft durch eine Bewegung der Lenkstange (17) nach unten bewegbar ist,
welche Lenkstange (17) als das vom Gelenk (1) beanstandete Bedienelement (25) ausgebildet ist,
**dadurch gekennzeichnet, dass**
das die Freigabeposition des ersten Eingriffselementes (9) definierende Langloch (11) unterhalb der die Sperrposition des ersten Eingriffselementes (9) definierende Ausnehmungen (12) angeordnet ist und
das erste Eingriffselement (9) durch das Bedienelement (25) von der Sperrposition in die Freigabeposition ausschließlich mittels einer Bewegung nach unten bewegbar ist, sodass das Bedienelement (25) durch das Eigengewicht des Benutzers unterstützend bedienbar ist.

2. Klappbarer Tretroller umfassend zumindest
einen Tragrahmen (28) mit einem vorderen Tragrahmenabschnitt (2) als erstes zu stellendes Element und einem hinteren Tragrahmenabschnitt (3) als zweites zu stellendes Element, oder einen Tragrahmen (28) als erstes zu stellendes Element mit einer angelenkten Haltestange (29) als zweites zu stellendes Element,
wobei die zu stellenden Elemente über ein Gelenk (1) verbunden sind,
welches Gelenk (1) ein erstes mit dem ersten zu stellendem Element verbundenes Eingriffselement (9) und ein zweites mit dem zweiten zu stellendem Element verbundenes Eingriffselement (10) umfasst, wobei das Gelenk (1) durch eine eine Relativbewegung der Eingriffselemente (9, 10) sperrende Eingriffsstellung der Eingriffselemente (9,10) sperrbar ist,
das erste Eingriffselement (9) von einer Freigabeposition in zumindest eine Sperrposition, in welcher das erste Eingriffselement (9) im Eingriff mit dem zweiten Eingriffselement (10) steht, durch eine Betätigung mittels eines mit dem ersten Eingriffselement (9) mechanisch gekoppelten
Bedienelementes (25) relativ zum zweiten Eingriffselement (10) bewegbar ist, welches Bedienelement (25) vom Gelenk (1) beabstandet an einem Kotflügel (26) angeordnet ist
**dadurch gekennzeichnet, dass**
der Kotflügel (26) und das Bedienelement (25) einstückig ausgebildet sind,
wobei das erste Eingriffsmittel (9) gegebenenfalls ein Vorspannmittel umfasst und die Sperrvorrichtung aus der Sperrposition unter Überwindung einer Vorspannkraft bewegbar ist.

3. Tretroller nach einem der Ansprüche 1 bis 2, **dadurch gekennzeichnet, dass** das Gelenk (1) in mehreren Stellungen des ersten zu stellenden Elementes zu dem zweiten zu stellenden Element sperrbar ist.

4. Tretroller nach einem der Ansprüche 1 bis 3, **dadurch gekennzeichnet, dass** das erste Eingriffselement (9) ein Stabelement (13) umfasst und das zweite Eingriffselement (10) ein Langloch (11) mit Raststellungen umfasst, sodass das im Langloch (11) gleitende Stabelement (13) zum Sperren des Gelenkes (1) durch Bewegung des Stabelementes (13) in die Raststellungen sperrbar ist.

5. Tretroller nach Anspruch 1, **dadurch gekennzeichnet, dass** das Bedienelement von einer ersten Stellung zum Gebrauch als ein Lenkstangenelement (21, 22) zu einer zweiten Stellung zur Bewegung des Sperrelementes überführbar ist.

## Claims

1. A foldable scooter, comprising at least
a support frame (28) having a front support frame section (2) as a first adjustable element and a rear support frame section (3) as a second adjustable element, wherein the two adjustable elements are joint via a hinge (1) comprising a hinge axis (8),
which hinge (1) comprises a first engaging element (9) connected to the first adjustable element and a second engaging element (10) connected to the second adjustable element,
and the second engaging element (10) comprises an elongate hole (11) having a plurality of recesses (12),
wherein the hinge (1) is lockable by an engaged configuration of the engaging elements (9, 10) locking a relative movement of the engaging elements (9, 10),
wherein the first engaging element (9), by actuating via an operating element (25), is movable relative to the second engaging element (10) from a locked position, in which locked position the first engaging element (9) engages the second engaging element (10) and a bar (13), as part of the first engaging element (9), is introduced into a recess (12) of the second engaging element (10), into a released position, in which released position the bar (13) is introduced into an elongate hole (11) radially spaced apart from the hinge axis (8),
which operating element (25) is mechanically coupled to the first engaging element (9), wherein a guide bearing (7) is attached to the front support frame section (2), which guide bearing (7) extends inclined at an angle alpha with respect to the front support frame section (2), and an actuating element (16) is movable through the operating element (25) movable in a guide bearing (7) and only in one direction of extension of said guide bearing (7), and the actuating element (16) comprises a projection (18) for the transfer of a movement to the first engaging element (9),
which first engaging element (9) comprises a spring (15) as a biasing means, wherein the first engaging element (9) is movable from the locked position into the released position complete with the actuating element (16) while overcoming a biasing force by a downward movement of the handlebar (17),
which handlebar (17) is formed as the operating element (25) spaced apart from the hinge (1),
**characterised in that**
the elongate hole (11) defining the released position of the first engaging element (9) is arranged below the recesses (12) defining the locked position of the first engaging element (9), and
the first engaging element (9) is movable from the locked position into the released position by the operating element (25) exclusively via downward movement,
so that the operating element (25) can be operated in a supporting manner by the user's own weight.

2. A foldable scooter, comprising at least
a support frame (28) having a front support frame section (2) as a first adjustable element and a rear support frame section (3) as a second adjustable element,
or a support frame (28) as a first adjustable element having an articulated holding bar (29) as a second adjustable element,
wherein the two adjustable elements are joint via a hinge (1),
which hinge (1) comprises a first engaging element (9) connected to the first adjustable element and a second engaging element (10) connected to the second adjustable element, wherein the hinge (1) is lockable by an engaged configuration of the engaging elements (9, 10) locking a relative movement of the engaging elements (9, 10), the first engaging element (9), by actuating via an operating element (25) mechanically coupled to the first engaging element (9), is movable relative to the second engaging element (10) from a released position into at least a locking position, in which the first engaging element (9) engages the second engaging element (10),
which operating element (25) is arranged spaced apart from the hinge (1) on a mudflap (26),
**characterised in that**
the mudflap (26) and the operating element (25) are integral,
wherein the first engaging means (9) optionally comprises a biasing means and the locking device is movable out of the locked position while overcoming a bias force.

3. The scooter of any one of claims 1 and 2, **characterised in that**
the hinge (1) is lockable in a plurality of configurations of the first adjustable element with respect to the second adjustable element.

4. The scooter of any one of claims 1 to 3, **characterised in that**
the first engaging element (9) comprises a bar element (13) and the second engaging element (10) comprises an elongate hole (11) having detent configurations, so that the bar element (13) gliding within the elongate hole (11) is lockable by moving the bar element (13) into the detent configurations.

5. The scooter of claim 1, **characterised in that**
the operating element is convertible from a first configuration for utilisation as a handlebar element (21, 22) into a second configuration for movement of the locking element.

## Revendications

1. Trottinette pliable comprenant au moins
un cadre de support (28) avec une section de cadre de support avant (2) comme premier élément à positionner et une section de cadre de support arrière (3) comme second élément à positionner,
dans lequel les éléments à positionner sont reliés par une articulation (1) comprenant un axe d'articulation (8),
ladite articulation (1) comprenant un premier élément de prise (9) relié au premier élément à positionner et un second élément de prise (10) relié au second élément à positionner
et le second élément de prise (10) comprenant un trou allongé (11) avec une pluralité d'évidements (12),
l'articulation (1) étant verrouillable par une position de prise des éléments de prise (9, 10) qui bloque un mouvement relatif des éléments de prise (9, 10),
le premier élément de prise (9) étant déplacé par rapport au second élément de prise (10) à partir d'une position verrouillée, dans laquelle le premier élément de prise (9) est en prise avec le second élément de prise (10) et une tige (13) qui est une partie du premier élément de prise (9) est insérée dans un évidement (12) du second élément de prise (10) dans une position de déverrouillage, dans laquelle la tige (13) est introduite dans un trou allongé (11) écarté radialement de l'axe d'articulation (8), par actionnement au moyen d'un élément d'actionnement (25),
ledit élément d'actionnement (25) étant couplé mécaniquement au premier élément de prise (9),
un palier de guidage (7) étant relié à la section de cadre de support avant (2), ledit palier de guidage (7) s'étendant de manière inclinée selon un angle alpha par rapport à la section de cadre de support avant (2), et un élément d'actionnement (16) étant déplaçable par l'élément d'actionnement (25) qui est déplaçable dans un palier de guidage (7) et uniquement dans une direction d'extension du palier de guidage (7), et l'élément d'actionnement (16) comprenant une saillie (18) pour transmettre un mouvement au premier élément de prise (9),
ledit premier élément de prise (9) comprenant un ressort (15) en tant que moyen de précontrainte, le premier élément de prise (9) pouvant être mouvé de la position de verrouillage à la position de déverrouillage conjointement avec l'élément d'actionnement (16) tout en surmontant une force de précontrainte par un mouvement vers le guidon (17),
ledit guidon (17) étant conçu comme l'élément d'actionnement (25) écarté de l'articulation (1),
**caractérisée en ce que**
le trou allongé (11) définissant la position de déverrouillage du premier élément de prise (9) est disposée sous les évidements (12) définissant la position de verrouillage du premier élément de prise (9), et
**en ce que** le premier élément de prise (9) peut être déplacé par l'élément d'actionnement (25) de la position de verrouillage à la position de déverrouillage exclusivement au moyen d'un mouvement vers le bas, de sorte que l'élément d'actionnement (25) puisse être actionné en appui par le propre poids de l'utilisateur.

2. Trottinette pliable comprenant au moins
un cadre de support (28) avec une partie de cadre de support avant (2) comme premier élément à positionner et une partie de cadre de support arrière (3) comme second élément à positionner,
ou un cadre de support (28) comme premier élément à positionner avec une barre de poignée articulée (29) comme second élément à positionner,
les éléments à positionner étant reliés l'un à l'autre par une articulation (1),
ladite articulation (1) comprenant un premier élément de prise (9) relié au premier élément à positionner et un second élément de prise (10) relié au second élément à positionner, ladite articulation (1) pouvant être verrouillée par une position de prise des éléments de prise (9, 10) qui bloque un mouvement relatif des éléments de prise (9, 10), le premier élément de prise (9) étant déplaçable par rapport au deuxième élément de prise (10) d'une position de déverrouillage à au moins une position de verrouillage, dans laquelle le premier élément de prise (9) est en prise avec le deuxième élément de prise (10), par actionnement au moyen d'un élément d'actionnement (25), qui est couplé mécaniquement au premier élément de prise (9),
ledit élément d'actionnement (25) étant disposé écarté de l'articulation (1) sur une aile (26)
**caractérisée en ce que**
l'aile (26) et l'élément de commande (25) sont formés en une seule pièce,
ledit premier élément de prise (9) comprenant éventuellement un moyen de précontrainte et le dispositif de verrouillage pouvant être déplacé de la position de verrouillage en surmontant une force de précontrainte.

3. Trottinette selon l'une quelconque des revendications 1 à 2, **caractérisé en ce que** l'articulation (1) est verrouillable dans une pluralité de positions du premier élément à positionner par rapport au second élément à positionner.

4. Trottinette selon l'une quelconque des revendications 1 à 3, **caractérisé en ce que**
le premier élément de prise (9) comprend un élément de tige (13) et le second élément de prise (10) comprend un trou allongé (11) avec des positions de verrouillage, de sorte que l'élément de tige (13) coulissant dans le trou allongé (11) peut être verrouillé pour verrouiller l'articulation (1) en déplaçant l'élément de tige (13) dans les positions de verrouillage.

5. Trottinette selon la revendication 1, **caractérisé en ce que**
l'élément d'actionnement est transférable d'une première position pour une utilisation en tant qu'élément de guidon (21, 22) à une seconde position pour le déplacement de l'élément de verrouillage.
